(19) Europäisches Patentamt
European Patent Office
Office européen des brevets

(11) **EP 3 148 791 B1**

(12) **EUROPEAN PATENT SPECIFICATION**

(45) Date of publication and mention
of the grant of the patent:
**27.02.2019 Bulletin 2019/09**

(51) Int Cl.:
*B32B 5/02* (2006.01)     *B32B 7/12* (2006.01)
*B32B 27/12* (2006.01)    *B32B 27/30* (2006.01)
*B32B 27/34* (2006.01)    *B32B 27/36* (2006.01)

(21) Application number: **15728345.8**

(22) Date of filing: **29.05.2015**

(86) International application number:
**PCT/US2015/033147**

(87) International publication number:
**WO 2015/184240 (03.12.2015 Gazette 2015/48)**

(54) **THERMOPLASTIC COMPOSITE LAMINATE AND ARTICLES MANUFACTURED THEREFROM**

THERMOPLASTISCHES VERBUNDLAMINAT UND DARAUS HERGESTELLTE ARTIKEL

STRATIFIÉ COMPOSITE THERMOPLASTIQUE ET ARTICLES FABRIQUÉS À PARTIR DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2014 CN 201410240754**
**30.05.2014 CN 201420287591 U**

(43) Date of publication of application:
**05.04.2017 Bulletin 2017/14**

(73) Proprietor: **E. I. du Pont de Nemours and Company**
**Wilmington, DE 19805 (US)**

(72) Inventors:
• **DU, Min**
**Shanghai 201204 (CN)**
• **LI, Xuedong**
**Shanghai 201210 (CN)**
• **SONG, Tao**
**Shanghai 201204 (CN)**
• **LIANG, Jessie**
**Shanghai 201203 (CN)**

(74) Representative: **Dannenberger, Oliver Andre**
**Abitz & Partner**
**Patentanwälte mbB**
**Arabellastrasse 17**
**81925 München (DE)**

(56) References cited:
**EP-A1- 2 475 154**     **US-A1- 2009 136 708**
**US-A1- 2011 171 867**

**Description**

FIELD OF THE INVENTION

This invention relates to thermoplastic composite laminates having high bonding strength, and articles made therefrom, having utility for housing or protective covers for mobile electronic devices.

BACKGROUND OF THE INVENTION

Composite laminates composed of thermoset resin and reinforcing fabric layers made of aromatic polyamide fibers are widely used as the housings or protective covers for sport products, industry products, and electric & electronic devices. Generally, the fabric is embedded in a thermoset resin as matrix to obtain a composite laminate having sufficient bonding strength between the fabric and the matrix. However, it takes a long time for the thermoset resin to be cured, the production cycle time is thus lengthened. To shorten the production cycle of the composite laminates, one approach is to use thermoplastic resin instead of thermoset resin as matrix. For example, International Patent Application Publication No. WO2010/036406 A2 discloses a method for producing aromatic polyamide fiber composites impregnated with a thermoplastic resin to be used as stab and ballistic resistant composite structure. Said thermoplastic resin is selected from ionomers, polyethylenes, polyesters, polyamides, polyimides, polycarbonates, polyurethanes, polyether ether ketones (PEEK) and phenolic modified resins, and combinations thereof.

One technical challenge is that the aromatic polyamide fibers are surface inert, especially to thermoplastic polymers such as polyamides and polycarbonates. As the bonding strength between the thermoplastic resin and the fabric composed of aromatic polyamide fibers is insufficient, the thermoplastic composite laminate as compared to the thermoset composite laminate may exhibit inferior mechanical properties and delamination problem.

U.S. Patent Application Publication No. 20110171867A1 discloses laminated composite materials useful for making rubbery goods such as hoses, which comprises at least a layer of elastomer and a layer of textile composed of aromatic polyamide fibers, wherein the surface of the textile is processed by silane to enhance the adhesion of the textile to the elastomeric matrix.

Each of the technical solutions cited above represented progress toward the goals to which they were directed. However, none describe the specific technical solutions of the composite laminates of this invention, and none satisfy all of the needs met by this invention.

SUMMARY OF THE INVENTION

This invention provides a thermoplastic composite laminate comprising in order

    (a) a top layer composed of at least one thermoplastic film.
    (b) a first tie layer,
    (c) a fabric layer composed of a fabric comprising aromatic polyamide fibers and a surface activation agent,
    (d) a second tie layer, and
    (e) a bottom layer composed of at least one thermoplastic film,

wherein
the fabric layer has a first surface and a second surface,
the first tie layer is bound to the top layer and the first surface of the fabric layer and the second tie layer is bound to the second surface of the fabric layer and the bottom layer,
the thermoplastic film of the top and bottom layer comprises or is produced from polyamide, polycarbonate, or a mixture thereof;
each of the first tie layer and the second tie layer independently comprises ethylene-vinyl acetate copolymer, chemically modified ethylene-vinyl acetate copolymer, ethylene-methacrylate copolymer, ethylene-acrylic acid copolymer, chemically modified ethylene-acrylic acid copolymer, or a mixture thereof; the aromatic polyamide fibers are produced from poly(p-phenylene terephthalamide) homopolymer, poly(p-phenylene terephthalamide) copolymer, poly(m-phenylene isophthalamide) homopolymer, poly(m-phenylene isophthalamide) copolymer, polysulfonamide homopolymer, polysulfonamide copolymer, or a mixture thereof, wherein the ethylene methacrylate copolymer is ethylene methacrylic acid copolymer. the surface activation agent is a silane, epoxide, or isocyanate, and
the thermoplastic composite laminate has a 25% or more increase in average bonding strength as compared to that of a comparative laminate having an untreated fabric for the fabric layer and lacking the first tie layer and the second tie layer.

This invention also provides articles comprising the thermoplastic composite laminate of the present invention, wherein the articles are housings or protective covers for mobile electronic devices.

## BRIEF DESCRIPTION OF THE DRAWINGS

Figure 1 is shows an expanded side view of one embodiment of this invention.
Figure 2 shows an expanded perspective view of a composite laminate as is used for the peel strength test.

## DETAILED DECSRIPTION

Unless stated otherwise, all percentages, parts, ratios, etc., are by weight.

As used herein, the term "produced from" is synonymous to "comprising". As used herein, the terms "comprises," "comprising," "includes," "including," "has," "having," "contains" or "containing," or any other variation thereof, are intended to cover a non-exclusive inclusion. For example, a composition, process, method, article, or apparatus that comprises a list of elements is not necessarily limited to only those elements but may include other elements not expressly listed or inherent to such composition, process, method, article, or apparatus.

The transitional phrase "consisting of" excludes any element, step, or ingredient not specified. If in the claim, such a phrase would close the claim to the inclusion of materials other than those recited except for impurities ordinarily associated therewith. When the phrase "consisting of" appears in a clause of the body of a claim, rather than immediately following the preamble, it limits only the element set forth in that clause; other elements are not excluded from the claim as a whole.

The transitional phrase "consisting essentially of" is used to define a composition, method or apparatus that includes materials, steps, features, components, or elements, in addition to those literally discussed, provided that these additional materials, steps features, components, or elements do not materially affect the basic and novel characteristic(s) of the claimed invention. The term "consisting essentially of" occupies a middle ground between "comprising" and "consisting of".

The term "comprising" is intended to include embodiments encompassed by the terms "consisting essentially of" and "consisting of". Similarly, the term "consisting essentially of" is intended to include embodiments encompassed by the term "consisting of".

When an amount, concentration, or other value or parameter is given as either a range, preferred range or a list of upper preferable values and lower preferable values, this is to be understood as specifically disclosing all ranges formed from any pair of any upper range limit or preferred value and any lower range limit or preferred value, regardless of whether ranges are separately disclosed. For example, when a range of "1 to 5" is recited, the recited range should be construed as including ranges "1 to 4", "1 to 3", "1-2", "1-2 & 4-5", "1-3 & 5", and the like. Where a range of numerical values is recited herein, unless otherwise stated, the range is intended to include the endpoints thereof, and all integers and fractions within the range.

When the term "about" is used in describing a value or an end-point of a range, the disclosure should be understood to include the specific value or end-point referred to.

Further, unless expressly stated to the contrary, "or" refers to an inclusive "or" and not to an exclusive "or". For example, a condition A "or" B is satisfied by any one of the following: A is true (or present) and B is false (or not present), A is false (or not present) and B is true (or present), and both A and B are true (or present).

"mol%" or "mole%" refers to mole percent.

In describing and/or claiming this invention, the term "homopolymer" refers to a polymer derived from polymerization of one species of repeating unit. For example, the term "poly(p-phenylene terephthalamide) homopolymer" refers to a polymer consisting essentially one species of repeat unit of p-phenylene terephthalamide.

As used herein, the term "copolymer" refers to polymers comprising copolymerized units resulting from copolymerization of two or more comonomers. "Dipolymer" refers to polymers consisting essentially of two comonomer-derived units and "terpolymer" means a copolymer consisting essentially of three comonomer-derived units.

As used herein, the term "fiber" is defined as a relatively flexible, elongate body having a high ratio of length to the width of the cross-sectional area perpendicular to that length. The fiber cross section can be any shape such as circular, flat or oblong but is typically circular. The fiber cross section can be solid or hollow, preferably, solid. Herein, the term "filament" or "continuous filament" is used interchangeably with the term "fiber." A single fiber may be formed from just one filament or from multiple filaments. A fiber formed from just one filament is referred to herein as either a "single-filament" fiber or a "monofilament" fiber, and a fiber formed from a plurality of filaments is referred to herein as a "multifilament" fiber. As used herein, the term "yarn" is defined as a single strand consisting of multiple fibers.

The diameter of fibers is usually characterized as a linear density termed "denier" or "dtex"; "denier" is the weight in grams of 9000 meters of fiber, and "dtex" is the weight in grams of 10,000 meters of fiber.

As used herein, a "layer" describes a generally planar arrangement of thermoplastic films, (co)polymeric films (for the tie layers) or fabric.

The invention is described in detail hereinunder.

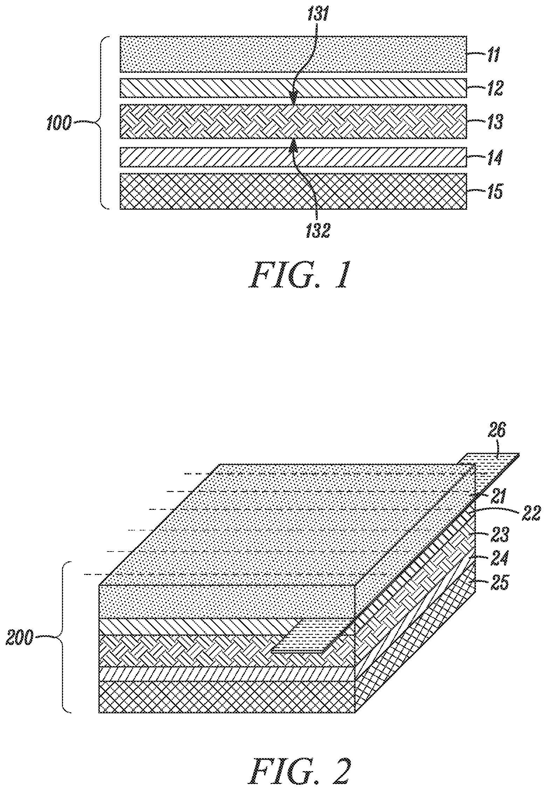

FIG 1 shows an expanded side view of one embodiment of the present composite laminate 100, which has a layer construction of (a) a top layer 11, (b) a first tie layer 12, (c) a fabric layer 13, (d) a second tie layer 14, and (e) a bottom layer 15, wherein the fabric layer 13 has a first surface 131 and a second surface 132, the first tie layer 12 is bound to the top layer 11 and the first surface 131 of the fabric layer 13, and the second tie layer 14 is bound to the second surface 132 of the fabric layer 13 and the bottom layer 15.

Thermoplastic Film

In the present invention, thermoplastic film suitable for use as the top layer 11 or the bottom layer 15 comprises, consists essentially of, consists of, or is produced from polyamide, polycarbonate, and a mixture thereof.

Aliphatic polyamides derived from single reactant such as lactams, amino carboxylates, or copolymers of these components, referred as AB type polyamides, include polyamide 6 (poly- -caproamide), polyamide 10 (poly- -decanoamide), polyamide 12 (poly- -dodecanoamide), and mixtures or copolymers thereof. Aliphatic polyamides prepared from the condensation of diamines and diacids, referred to as AABB type polyamides, include polyamide 66, polyamide 610 (polyhexamethylene sebacamide), polyamide 612 (polyhexamethylene dodecanamide), polyamide 46 (polytetramethylene adipamide), polyamide 1010 (polydecamethylene sebacamide), and polyamide 1212 (polydodeca-methylene dodecanamide). Other semi-aromatic polyamides that are also AABB type polyamides such as polyamide MXD6 (poly(m-xylene adipamide)), polyamide 6T (polyhexamethylene terephthalamide), polyamide DT (poly(2-methylpentamethylene terephthalamide)), polyamide 6I (polyhexamethylene isophthalamide), or polyamide M5I (poly(2-methylpentamethylene isophthalamide)) may also be suitable.

In one embodiment, the polyamide films for the top layer 11 or the bottom layer 15 in the present thermoplastic composite laminate comprises polyamide 6I/6T, polyamide 66, polyamide 610, polyamide 612, polyamide 1010, polyamide 1012, or blends thereof. In another embodiment, the polyamide films for the top layer 11 or the bottom layer 15 in the present thermoplastic composite laminate comprises, consists essentially of, consists of, or is produced from polyamide 6I/6T.

Various polyamides described herein can be obtained commercially, for example, SELAR® 3462, manufactured by E. I. du Pont Nemours and Company. Inc. (hereunder is abbreviated as "DuPont").

Polycarbonates suitable for use as the top layer 11 or the bottom layer 15 in the present invention are derived from diphenols and carbonate precursors in a solution method or in a melt method, such as those as produced through reaction of a diphenol and phosgene or through transesterification of a diphenol and a diphenyl carbonate. Various diphenols are usable, including, for example, 2,2-bis(4-hydroxyphenyl)propane (i.e. bisphenol A), bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkanes, bis(4-hydroxyphenyl)oxide, bis(4-hydroxyphenyl)sulfide, bis(4-hydroxy-phenyl)sulfone, bis(4-hydroxyphenyl)sulfoxide, bis(4-hydroxyphenyl)ether, bis(4-hydroxy-phenyl)ketone, etc. Other diphenols such as hydroquinone, resorcinol, catechol and the like are also usable in the invention. The diphenols mentioned herein may be used either singly or as combined. The carbonate precursors for use in the invention include, for example, carbonyl halides, carbonyl esters, haloformates, concretely, phosgene, diphenol dihaloformates, diphenyl carbonate, dimethyl carbonate, diethyl carbonate.

Suitable polycarbonates can be purchased from commercial sources such as MAKROLON™ from Bayer, LEXAN™ from SABIC, PAN LITE® from Teijin, XANTAR® from DSM, IUPILON® from Mitsubishi, and CALIBER® from Dow.

Polyamides, polycarbonates, and mixtures thereof described above can be melted and processed into a film by blowing, casting, or extrusion coating. Because the manufacturing processes for polyamide films and polycarbonate films are well known to one skilled in the art, the disclosure of which is omitted herein for the interest of brevity.

In one embodiment, the thermoplastic films for the top layer 11 and the bottom layer 15 of the present thermoplastic composite are the same.

The combined weight of the thermoplastic films for the top layer 11 and the bottom layer 15 is from about 5 weight % to about 40 weight %, based on the total weight of the thermoplastic composite laminate.

In one embodiment, the thickness of the top layer 11 and the bottom layer 15 each independently is from about 0.01 mm to about 1.5 mm.

Tie Layer

As used herein, a "tie" layer refers to a layer of polymeric materials located in between the thermoplastic films for the top layer 11 or the bottom layer 15 and the fabric 13 and enhances the bounding strength between these adjacent layers. One skilled in the art can select the appropriate polymeric materials for use as the tie layer based on the materials of the adjacent layers.

In the present invention, each of the first tie layer 12 and the second tie layer 14 independently comprises, consists essentially of, consists of, or is produced from ethylene-vinyl acetate copolymer (EVA), chemically modified ethylene-vinyl acetate copolymer, ethylene-methacrylate copolymer (EMA), chemically modified ethylene-methacrylate copolymer, ethylene-acrylic acid copolymer (EAA), chemically modified ethylene-acrylic acid copolymer, or a mixture thereof.

In the present invention, "chemically modified" means modifying ethylene-vinyl acetate copolymer, ethylene-methacrylate copolymer, or chemically modified ethylene-methacrylate copolymer with a chemical reagent selected from acid, anhydride, or ester, preferably with maleic acid, itaconic acid, and anhydride thereof.

EVA is a copolymer of ethylene and vinyl acetate, wherein the weight percent of vinyl acetate may vary from about 10 weight % to about 40 weight %. EMA is a copolymer of ethylene and methacrylic acid or ester thereof, wherein the weight percent of methacrylic acid or ester thereof may vary from about 1 weight % to about 50 weight %. The methacrylic ester includes, but not limited to, methyl methacrylate (MMA), ethyl methacrylate (EMA), butyl methacrylate (BMA), 2-ethylhexyl methacrylate (EHMA), lauryl methacrylate (LMA), 2-hydroxyethyl methacrylate (HEMA).EAA is a copolymer of ethylene and acrylic acid or ester thereof, wherein the weight percent of acrylic acid or ester thereof may vary from about 1 weight % to about 50 weight %. The acrylic ester includes, but not limited to, methyl acrylate (MA), ethyl acrylate (EA), butyl acrylate (BA), 2-ethylhexyl acrylate (EHA), 2-hydroxyethyl acrylate (HEA).Various polymeric materials for use as the first tie layer 12 or the second tie layer 14 described herein can be obtained commercially, for example, BYNEL® and NUCREL®, which are manufactured by DuPont.

In one embodiment, in the present thermoplastic composite laminate, each of the first tie layer 12 and the second tie layer 14 independently comprises, consists essentially of, consists of, or produced from anhydride modified ethylene-vinyl acetate copolymer. In another embodiment, in the present thermoplastic composite laminate, each of the first tie layer 12 and the second tie layer 14 independently comprises, consists essentially of, consists of, or is produced from ethylene-methacrylic acid copolymer. In yet another embodiment, in the present thermoplastic composite laminate, each of the first tie layer 12 and the second tie layer 14 independently comprises, consists essentially of, consists of, or is produced from anhydride modified ethylene-acrylate copolymer. In a further embodiment, the polymeric materials for use as the first tie layer 12 and the second tie layer 14 of the present thermoplastic composite laminate are the same.

In one embodiment, the combined weight of the first tie layer 12 and the second tie layer 14 is from about 5 weight % to about 30 weight %, based on the total weight of the thermoplastic composite laminate.

In one embodiment, the thickness of the first tie layer 12 and the second tie layer 14 each independently is from about 0.01 mm to about 0.5 mm.

Fabric Layer

As used herein, the fabric for use as the fabric layer 13 prior to treating with a surface activation agent is referred as the "untreated fabric."

In the present invention, the untreated fabric comprises aromatic polyamide fibers produced from poly(p-phenylene terephthalamide) homopolymer, poly(p-phenylene terephthalamide) copolymer, poly(m-phenylene isophthalamide) homopolymer, poly(m-phenylene isophthalamide) copolymer, polysulfoneamide homopolymer, polysulfoneamide copolymer, and mixture thereof.

Poly(p-phenylene terephthalamide) homopolymer is resulting from mole-for-mole polymerization of p-phenylene diamine (PPD) and terephthaloyl chloride (TCI). Also, poly(p-phenylene terephthalamide) copolymers are resulting from incorporation of as much as 10 mol% of other diamines with the p-phenylene diamine and of as much as 10 mol% of other diacid chlorides with the terephthaloyl chloride, provided only that the other diamines and diacyl chlorides have no reactive groups which interfere with the polymerization reaction. Examples of diamines other than p-phenylene diamine include but not limited to m-phenylene diamine, or 3,4'-diaminodiphenylether (3,4-ODA). Examples of diacyl chlorides other than terephthaloyl chloride include but not limited to isophthaloyl chloride, 2,6-naphthaloyl chloride, chloroterephthaloyl chloride, or dichloroterephthaloyl chloride.

As used herein, the term "p-aramid" refers to poly(p-phenylene terephthalamide) homopolymer and copolymers.

Poly(m-phenylene isophthalamide) homopolymer is resulting from mole-for-mole polymerization of m-phenylene diamine and isophthaloyl chloride. Also, poly(m-phenylene isophthalamide) copolymers are resulting from incorporation of as much as 10 mol% of other diamines with the m-phenylene diamine and of as much as 10 mol% of other diacid chlorides with the isophthaloyl chloride, provided only that the other diamines and diacyl chlorides have no reactive groups which interfere with the polymerization reaction. Examples of diamines other than m-phenylene diamine include but not limited to p-phenylene diamine or 3,4'-diaminodiphenylether. Examples of diacyl chlorides other than isophthaloyl chloride include but not limited to terephthaloyl chloride, 2,6-naphthaloyl chloride, chloroterephthaloyl chloride, or dichloroterephthaloyl chloride.

As used herein, the term "m-aramid" refers to poly(m-phenylene isophthalamide) homopolymer and copolymers.

Polysulfonamide homopolymers may be resulting from mole-for-mole polymerization of a diamine such as 4,4'-diaminodiphenylsulfone (p-DDS) or 3,3'-diaminodiphenylsulfone (m-DDS), and a diacyl chloride such as terephthaloyl chloride or isophthaloyl chloride.

Polysulfonamide copolymers include, for example, copolymers resulting from a diamine such as p-DDS and a mixture of terephthaloyl chloride and other diacyl chlorides (e.g., isophthaloyl chloride); and copolymers resulting from a diacyl chloride such as terephthaloyl chloride and a mixture of diamines such as p-DDS, m-DDS, and as much as 10 mol% of other diamine (e.g., p-phenylene diamine, or m-phenylene diamine).

Preferably, polysulfonamide copolymers are derived from p-DDS, m-DDS and terephthaloyl chloride in a mole ratio of 3:1:4.

As used herein, the term "PSA" refers to polysulfonamide homopolymers and copolymers.

The polymers or copolymers of aromatic polyamide described above can be spun into fibers via solution spinning, using a solution of the polymer or copolymer in either the polymerization solvent or another solvent for the polymer or copolymer. Fiber spinning can be accomplished through a multi-hole spinneret by dry spinning, wet spinning, or dry-jet wet spinning (also known as air-gap spinning) to create a multi-filament fiber as is known in the art. The fibers in the multi-filament fiber after spinning can then be treated to neutralize, wash, dry, or heat treat the fibers as needed using conventional technique to make stable and useful fibers. Exemplary dry, wet, and dry-jet wet spinning processes are disclosed U.S. Pat. Nos. 3,063,966; 3,227,793; 3,287,324; 3,414,645; 3,869,430; 3,869,429; 3,767,756; and 5,667,743.

Method of producing aromatic polyamide fibers are disclosed in U.S. Pat. Nos. 4,172,938; 3,869,429; 3,819,587; 3,673,143; 3,354,127; and 3,094,511. Specific methods of making PSA fibers or copolymers containing sulfone amine monomers are disclosed in Chinese Patent Publication No. 1389604A Aromatic polyamide fiber is also commercially available, for example, KONEX®, TECHNORA®, and TWARON® from Teijin (Japan), APIAIRE® from Unitika, NOMEX® and KEVLAR® from DuPont, TWARON® from Teijin, HERACRON® from Kolon Industries, Inc. (Korea), SVM™ and RUSAR™ from Kamensk Volokno JSC of Russia, ARMOS™ from JSC Chim Volokno of Russia, and the like. PSA fiber is commercially available as TANLON™ from Shanghai Tanlon Fiber Co., Ltd. (China) However, the aromatic polyamide fiber is not limited to these products.

Finer fibers are more costly to manufacture and to weave, but can produce greater effectiveness per unit weight. Considering the effectiveness and cost, each yarn, which include a plurality of fibers, have a preferred linear density of from about 200 denier (220 dtex) to about 3,000 denier (3300 dtex), more preferably from about 400 denier (440 dtex) to about 2,400 denier (2640 dtex), and most preferably from about 1,000 denier (1100 dtex) to about 2,000 denier (2200 dtex).

In the present invention, the fabric for use as the fabric layer 13 is a woven fabric, a plurality of plies of unidirectional fabric, or a nonwoven fabric. As used herein, the term "nonwoven fabric" refers to any other fabric structure that has been formed from a plurality of randomly oriented fibers, including felts, mats and other structures.

In one embodiment of the invention, the fabric for use as the fabric layer 13 is a woven fabric, a unidirectional fabric, or a nonwoven fabric. In another embodiment of the invention, the fabric for use as the fabric layer 13 is a woven fabric.

Woven fabrics generally have a plurality of warp yarns running lengthwise in the machine direction, and a plurality of fill yarns running substantially perpendicularly to the warp yarns (i.e., in the cross-machine direction). Any weave construction or pattern may be used, for example, such as plain weave, twill weave, satin weave, basket weave.

Although woven fabrics suitable for the invention have no specific requirement for tightness of weave, except to avoid extremely tight weaves to avoid damage of yarn fibers resulting from the rigors of weaving.

The basis weight of the untreated fabric ranges from about 20 g/m² to about 660 g/m²; preferably, from about 40 g/m² to about 300 g/m²; more preferably, from about 60 g/m² to about 200 g/m².

In the present invention, the fabric for use as the fabric of layer 13 further comprises a surface activation agent. Said surface activation agent enhances the bonding strength between the fabric 13 and the thermoplastic films of the top layer 11 or the bottom layer 15. A suitable surface activation agent is selected from silane, epoxide or isocyanate.

Suitable silanes for the present invention have the common formula as shown below:

$$G_{x\text{-}}((CH_2)_y Si(OR^1)_m (OR^2)_n)_k, \text{ or } Si(OR^3)_4$$

wherein G is vinyl, methacrylic, dehydrated glycerol ether, epoxy cyclohexyl, mercapto, octanoylthio, sulfur, halogen, amino, ethylene diamine, isobutyl amino, aniline, urea, or isocyanate;
x is an integer from 1 to 4;
y is an integer from 0 to 6;
$R^1$ is an alkyl group or ether group containing from 1 to 4 carbon atoms;
each of $R^2$ and $R^3$ is independently alkyl group containing from 1 to 3 carbon atoms; and
m, n and k are integers from 1 to 3.

Various silanes described herein can be obtained commercially, for example, γ-methacryloxypropyl trimethoxysilane (SILQUEST® A-174), γ-glycidoxypropyl trimethoxysilane (SILQUEST® A-187), β-(3,4-epoxy cyclohexyl)ethyl trimethoxy silane (SILQUEST® A-186), γ-mercaptopropyl trimethoxy silane (SILQUEST® A-189), N-β-(aminoethyl)-γ-aminopropyl trimehthoxy silane (SILQUEST® A-1120), γ-aminopropyl trimethoxy silane (SILQUEST® A-1524), or γ-isocyanatopropyl trimethoxysilane (SILQUEST® A-link 35), which are manufactured by Momentive Performance Material Co.

Suitable epoxides for the present invention include, but not limited to, phenolic glycidyl ethers, aromatic glycidyl ethers, glycerol polyglycidyl ethers, glycidyl amines, and cycloaliphatic epoxides.

Various epoxides described herein can be obtained commercially, for example, 1,3-diglycidyl glycerol ether, under the tradename of DENACOL® EX-313 and manufactured by Nagase Chemical.

Suitable isocyanate for the present invention include, but not limited to, hexamethylene diisocyanate (HDI); isophorone diisocyanate (IPDI), 2,4-toluene diisocyanate (2,4-TDI), 2,6-toluene diisocyanate (2,6-TDI), and 4,4'-methylene diphenyldiisocyanate (MDI).

Various isocyanates described herein can be obtained commercially, for example, MDI under the tradename of PAPI™ 27 and manufactured by Dow Chemical.

In one embodiment, the fabric for use as the fabric layer 13 in the present invention comprises a surface activation agent selected from the group consisting of γ-methacryloxypropyl trimethoxysilane, γ-glycidoxypropyl trimethoxysilane, β-(3,4-epoxycyclohexyl)ethyl trimethoxysilane, γ-mercaptopropyl trimethoxysilane, N-β-(aminoethyl)-γ-aminopropyl trimehthoxysilane, γ-aminopropyl trimethoxysilane, γ-isocyanatopropyl trimethoxysilane; phenolic glycidyl ethers, aromatic glycidyl ethers, glycerol polyglycidyl ethers, glycidyl amines, cycloaliphatic epoxides; hexamethylene diisocyanate; isophorone diisocyanate, 2,4-toluene diisocyanate, 2,6-toluene diisocyanate, and 4,4'-methylene diphenyl diisocynanate.

In one embodiment, the fabric for use as the fabric layer 13 is prepared by a method comprising: i) applying a coating composition onto an untreated fabric to obtain a wet fabric, and ii) drying the wet fabric at a temperature ranging from ambient temperature to about 220°C, for about 1 minute to about 60 minutes, wherein the amount of the surface activation agent is from about 1 weight % to about 20 weight %, based on the total weight of the coating composition.

The coating composition used in the present invention contains a surface activation agent and a solvent, wherein the solvent may be water, organic solvents, or mixtures thereof. Examples of suitable organic solvents include methanol, ethanol, 2-butoxyethanol, n-propanol, i-propanol, n-butanol, i-butanol, 2-butanol, ethyl ether, n-butyl ether, tetrahydrofuran, formic acid, acetic acid, toluene, and xylene.

Suitable treating methods for applying the coating composition onto the untreated fabric include, but not limited to, dipping, soaking, and spraying.

In one embodiment, the fabric for the fabric layer 13 is prepared by the method comprising: soaking an untreated fabric in a coating composition containing a surface activation agent and a solvent; drying at ambient temperature to evaporate most of the solvent; and optionally further drying in an oven at an elevated temperature.

There is no special restriction on the soaking time, as long as the untreated fabric is thoroughly soaked in the coating composition. In one embodiment, the soaking time is from about 0.05 hours to about 18 hours, or from about 0.1 hour to about 12 hours, or from about 0.2 hours to about 8 hours. The soaking temperature is from about 10°C to about 40°C, preferably at ambient temperature.

The oven-drying temperature is from about 50°C to about 250°C, or from about 70°C to about 150°C. The oven-drying time is from about 0.5 minutes to about 1.5 hours, or from about 1 minute to about 1 hour.

In one embodiment of the present invention, the fabric for use as the fabric layer 13 comprises a surface activation agent in an amount of from about 0.5 weight % to about 15 weight %, based on the total weight of the fabric.

In one embodiment, the weight of the fabric layer 13 is from about 30 weight % to about 90 weight %, based on the total weight of the thermoplastic composite laminate.

In one embodiment, the thickness of the fabric layer 13 of the present thermoplastic composite laminate is from about 0.05 mm to about 1.0 mm.

Preparation of the Thermoplastic Composite Laminate

The thermoplastic composite laminate 100 of the present invention comprises in order of: (a) a top layer 11, (b) a first tie layer 12, (c) a fabric layer 13, (d) a second tie layer 14, and (e) a bottom layer 15, wherein the fabric layer 13 has a first surface 131 and a second surface 132, the first tie layer 12 is bound to the top layer 11 and the first surface 131 of the fabric layer 13, and the second tie layer 14 is bound to the second surface 132 of the fabric layer 13 and the bottom layer 15 as shown in FIG. 1.

As used herein to describe the structure of a composite laminate, the "/" is used to separate each distinctive layer with the adjacent layer(s) therein. Therefore, the structure of the present thermoplastic composite laminate 100 or 200 may be represented as 11/12/13/14/15 in Fig 1 or as 21/22/23/24/25 in Fig 2 respectively.

There is no special restriction on methods for preparing the thermoplastic composite laminates in the present invention, and it can be any conventional known method in this field.

Suitable methods for preparing the present thermoplastic composite laminate include hot pressing, thermal compression molding, autoclave molding, and double-belt hot melt pressing.

Process parameters such as temperatures, pressures, and times for preparing the present thermoplastic composite laminate are generally dependent on the materials of the thermoplastic films, the tie layers, and the fabric as well as the preparation method. One skilled in the art can decide suitable process parameters accordingly.

In one embodiment, the present thermoplastic composite laminate is prepared by hot pressing.

Hot pressing may typically be done at a temperature that is at least higher than the melting point of the polymeric materials for the tie layers 12 and 14, and is no more than 20°C above the melting point of the thermoplastic materials for the top layer 11 and the bottom layer 15.

In one embodiment, the hot pressing is done at a temperature ranging from about 100°C to about 250°C, preferably from about 125°C to about 225°C, more preferably from about 150°C to about 200°C; at a pressures ranging from about 0.2 MPa to about 17.4 MPa, preferably from about 0.5 MPa to about 5 MPa; and for from about 0.5 minutes to about 40 minutes, preferably from about 1 minute to about 20 minutes.

The present thermoplastic composite laminate after hot pressing generally has a total thickness of from about 0.1 mm to about 5 mm; preferably, from about 0.5 mm to about 3 mm. The total thickness of the present thermoplastic composite laminate can be adjusted easily by using thermoplastic films for use as the top layer 11 and bottom layer 15 and fabric for use as the fabric layer 13 of various thicknesses.

When the thermoplastic films for the top layer 11 or the bottom layer 15 of the thermoplastic composite laminate are polyamide films, the bonding strength of the present thermoplastic composite laminate is evaluated by the average peel strength between the fabric layer 13 and the top layer 11, or between the fabric layer 13 and the bottom layer 15. Because polycarbonate films are too brittle to sustain the peel strength test, when the thermoplastic films for the top layer 11 or the bottom layer 15 of the thermoplastic composite laminate are polycarbonate films, the bonding strength of the present thermoplastic composite laminate is evaluated by the average shear strength between the fabric layer 13 and the top layer 11, or between the fabric layer 13 and the bottom layer 15. If a greater strength is needed to peel or shear the adjacent layers apart which means that the bonding strength between these layers is higher. As used herein, the term "average peel strength" refers to the average strength measured according to ASTM D6862 by peeling off the top layer 11 or the bottom layer 15 from the fabric layer 13 along with or without the adjacent tie layer 12 or 14, since during peeling process, the adjacent tie layer 12 or 14 may adhere to the thermoplastic film of the top layer 11 or the bottom layer 15 or to the fabric layer 13. As used herein, the term "average shear strength" refers to the average strength measured according to GB7124 by shearing off the top layer 11 or the bottom layer 15 from the fabric layer 13 along with or without the adjacent tie layer 12 or 14, since during shearing process, the adjacent tie layer 12 or 14 may adhere to the thermoplastic film of the top layer 11 or the bottom layer or to the fabric layer 13.

Considering cost and ease of production, in the present invention the thermoplastic films for the top layer 11 and bottom layer 15 preferably are the same, and the polymeric materials for the first tie layer 12 and second tie layer 14 are also the same. Therefore, the peel strength test of the thermoplastic composite laminate can be performed on only one side of the fabric layer 13.

The thermoplastic composite laminate of the present invention exhibits a 25% or more increase in average bonding strength as compared to that of a comparative laminate having an untreated fabric for use as the fabric layer 13 and lacking the tie layers 12 and 14. The thermoplastic composite laminate of the present invention preferably exhibits a 30%, or 50%, or 75%, or 100% increase in average bonding strength as compared to that of a comparative laminate.

Additional layer(s) may optionally be applied to the present thermoplastic composite laminate, for example, a layer of ultraviolet protection material may be applied above the top layer 11.

Articles comprise, consist essentially of, consist of, or are produced from the inventive thermoplastic composite laminates have high structural integrity due to their excellent interlayer bonding strength. Furthermore, the inventive thermoplastic composite laminates not only improves the process efficiency through shortened cycle time (i.e. cost saving), but also offers the chance to reprocess as needed for later applications as compared to the thermoset composite laminates.

Articles of the present invention are useful as housings or protective covers for mobile electronic devices, which preferably have an average peel strength of more than 65 N/25.4 mm, or 85 N/25.4 mm, or 100 N/25.4 mm or more, or preferably have an average shear strength of more than 4 MPa, or 5 MPa, or 5.5MPa. Examples of mobile electronic devices include handheld computers, tablet computers, mobile phones, e-readers, portable game devices, portable media players, or digital cameras. Examples of mobile phones include but not limited to flip phones, slider phones, radio telephones, cellular phones, smart phones.

## EXAMPLES

The abbreviation "E" stands for "Example" and "CE" stands for "Comparative Example" is followed by a number indicating in which example the thermoplastic composite laminate is prepared. The examples and comparative examples were all prepared and tested in a similar manner.

Materials

Thermoplastic film (A1): a polyamide 6I/6T film produced by casting SELAR® PA3426, DuPont; the film has a width of 50 cm, a thickness of about 0.16 mm, and a melting point of 250°C.

Thermoplastic film (A2): a polycarbonate film purchased from SABIC under trade name LEXAN®8B35; the film has a width of 100 cm, a thickness of about 0.175 mm, and a vicat softening temperature of 160°C.

EVA film (B1): an anhydride modified ethylene-vinyl acetate copolymer film produced by casting BYNEL® 30E671, DuPont; the film has a width of 50 cm, a thickness of about 0.06 mm, and a melting point of 99°C.

EMA film (B2): an ethylene-methacrylic acid copolymer film produced by casting NUCREL®599, DuPont; the film has 10 weight % of methacrylic acid as comonomer, a width of 50 cm, a thickness of about 0.06 mm, and a melting point of 98°C.

EAA film (B3): an anhydride modified ethylene-acrylate copolymer film produced by casting BYNEL®21E533, DuPont; the film has a width of 50 cm, a thickness of about 0.06 mm, and a melting point of 83°C.

Untreated fabric (U1): a twill weave fabric produced from poly(m-phenylene terephthalamide) yarns of 1200 denier (1334 dtex) (NOMEX® white, available from DuPont) for warp and weft yarns, size: 9 x 9 ends/cm$^2$, a basis weight of about 245 g/m$^2$, purchased from Chomarat Co.

Untreated fabric (U2): a plain weave fabric produced from poly(p-phenylene terephthalamide) yarns of 1500 denier (1670 dtex) (KELVAR®, available from DuPont) as warp and weft yarns, size: 7 x 7 ends/cm$^2$, basis weight: 200 g/m$^2$, purchased from Jiangsu Tianniao High Tech. Co.

Surface activation agent (S1): γ-glycidoxypropyltrimethoxysilane (CAS No. 2530-83-8), SILQUEST® A-187, purchased from Momentive Performance Material Co.

Surface activation agent (S2): glycerol polyglycidyl ether (CAS No. 13236-02-7), DENACOL® EX-313, purchased from Nagase Chemical.

Surface activation agent (S3): 4,4'-methylene diphenyl diisocyanate (CAS No. 9016-87-9), PAPI™ 27, purchased from Dow Chemical.

Coating composition (CC1): a solution made of 25.3 g of the surface activation agent (S1), 2.5 g of acetic acid, and 225 g of water.

Coating composition (CC2): a solution made of 8.8 g of the surface activation agent (S2), 1.52 g of 2-butoxyethanol, 2.24 g of dioctyl sodium sulfosuccinate, and 387.3 g of water.

Coating composition (CC3): a solution made of 158 g of the surface activation agent (S3), and 285 g of toluene.

Procedures for Making the Thermoplastic Composite Laminates of E1-E7 and CE1-CE9

Step A: Fabric Treatment

A piece of the untreated fabric (15 cm x 15 cm) was soaked in a coating composition (about 250 mL to about 450 mL) at ambient temperature for about 30 minutes, then removed from the coating composition. Excess coating composition was removed by hanging the wet fabric until no liquid dripping at ambient temperature for about 30 seconds; and/or laid dry for overnight to evaporate most of the solvent; and oven-dried further at an elevated temperature and for a duration as specified in Table 1.

Table 1

| Fabric number | Coating Composition: Surface activation agent type | Untreated Fabric | Oven temperature | Drying duration (minute) |
|---|---|---|---|---|
| F1 | CC1: silane | U1 | 80 | 60 |
| F2 | CC2: epoxide | U1 | 200 | 1 |
| F3 | CC3: isocyanate | U1 | 200 | 1 |

(continued)

| Fabric number | Coating Composition: Surface activation agent type | Untreated Fabric | Oven temperature | Drying duration (minute) |
|---|---|---|---|---|
| F4 | CC1: silane | U2 | 80 | 60 |

Step B: Hot pressing

A stainless steel mold (composed of two 35 cm x 35 cm x 1.5 cm stainless steel plates) was applied for molding. The temperature of the hot pressing machine (manufactured by PHI) was set at 175°C. The mold was pre-heated in the hot pressing machine to 175°C. The mold was taken out of the hot pressing machine, and opened. Then a release paper (provided by Jiangsu TianNiao high tech. Co., 35 cm x 35 cm) was placed in the base plate of the mold to facilitate eventual removal of the prepared laminate from the mold after hot pressing.

Thermoplastic films for the top layer 11 and the bottom layer 15, films for use as the first tie layer 12 and the second tie layer 14, were cut into a square of 15 cm x 15 cm, and the treated fabrics obtained from Step A for use as the fabric layer 13 were stacked in the following manner.

Firstly, the thermoplastic film for use as the top layer 11 was laid over the first release paper and in the center of the mold. Afterwards, the film for use as the first tie layer 12, the fabric for use as the fabric layer 13, the film used as the second tie layer film 14 and the thermoplastic film used as the bottom layer 15 were laid in sequence to form distinct layers of various laminate samples as specified in Tables 2-5.

For preparing the comparative examples, both of the tie layers 12 and 14 were excluded and the fabric for use as the fabric layer 13 was replaced with an untreated fabric, or both of the tie layers 12 and 14 were excluded, or the fabric for use as the fabric layer 13 was replaced with an untreated fabric. After these distinct layers were laid in place to obtain a preform, the second release paper (35 cm x 35 cm) was placed over the preform, and the mold was closed.

For preparing the peel strength samples, after obtaining the preform, a strip of the release paper (2.54 cm in width and 20 cm in length) was placed between the top layer 11 and the first tie layer 12 and along one edge to leave a small un-laminated area for easy mounting of the test specimen onto the testing machine.

After the assembly of the preform, the mold was closed and put back into the hot pressing machine. For samples comprising thermoplastic film (A1) (i.e. E1-E5, E7, and CE1-CE6),hot pressed at 175°C with a pressure of 1 MPa for 10 minutes; for samples comprising thermoplastic film (A2) (i.e. E6, and CE7-CE9), hot pressed at 190°C with a pressure of 1 MPa for 10 minutes. After hot pressing, the mold was taken out of the hot press machine; the lid was removed from the mold, followed by removal of the second release paper. The thermoplastic composite laminate was removed from the mold, separated from the first release paper, and cooled to ambient temperature.

## TEST METHODS

Thickness measurement: the thickness of the laminate sample was determined by a micrometer caliper. Each specimen was measured 6-10 times at different spots and the results were averaged and reported in Table 2-5.

Peel strength test: each laminate sample was cut to obtain 5 test specimens (i.e. a rectangle of 127.0 mm x 25.4 mm) by a laser cutting machine (purchased from Han's Laser Technology Industry Group Co. Ltd., model: P060). FIG 2 shows an expanded perspective view of the present composite laminate sample 200, which is used for the peel strength test. It has a layer construction of (a) a top layer 21, (b) a first tie layer 22, (c) a fabric layer 23, (d) a second tie layer 24, and (e) a bottom layer 25; and a strip of release paper 26 which is placed between the top layer 21 and the first tie layer 22 along one edge. The parallel dashed lines indicate the cutting lines for the test specimens.

Each test specimen was fixed on a sample holder, which is a steel plate having a size of 160 mm (L) x 120 mm(W), with the aid of an thermoset epoxy tape for a 90° peel strength test. The top layer 21 of the test specimen was in contact with the epoxy tape and hot pressed at 120°C for 1 hour to cure the epoxy resin. Using an Instron® materials test machine (manufactured by Instron® company, model: 5567), the sample holder affixed with the test sample was put in place, and the layers (b)-(e) (i.e. the layers **22-25** of the composition laminate sample **200** in Fig. 2) at the open end of the laminate sample was clamped to the crosshead. The 90° peel strength was measured with a crosshead speed of 100 mm/min and a load of 5 kN for a 60 mm distance according to ASTM D6862. The peel strength data of five test specimens were averaged, recorded in unit of N/25.4 mm, and listed in Tables 2-3 and Tables 5.

Improvement of peel strength ($\Delta P$): the improvement of average peel strength was calculated by the equation shown below:

$$\Delta P \% = [(P_n - P_0)/P_0] \times 100$$

where $P_0$ is the average peel strength of a reference example; and
$P_n$ is the average peel strength of a comparing example.

Shear strength test: each laminate sample was cut to obtain 5 test specimens (i.e. a rectangle of 127.0 mm x 25.4 mm) by a laser cutting machine (purchased from Han's Laser Technology Industry Group Co. Ltd., model: P060). Fig. 2 illustrated the laminate sample for shear strength test.

Each test specimen was fixed on a sample holder, which has two steel plates with a size of 100 mm (L) x 25 mm (W), with the aid of a thermoset epoxy tape for a shear strength test. The top layer 21 and bottom layer 25 of the test specimen were bonded to the two steel plates separately with epoxy resin, and the epoxy resin was cured for at least 24 hours. Using an Instron® materials test machine (manufactured by Instron® company, model: 5567), the sample holder affixed with the test sample was locked between the upper and lower clamps (2716-015) and clamped tightly. The upper clamp moved with a speed of 2 mm/min and a load of 30 kN according to GB7124, and the shear strength for shearing off the layers was measured and recorded in unit of N/25.4 mm. The shear strength data of five test specimens were averaged and listed in Tables 4-5.

Improvement of shear strength (ΔS): the improvement of average shear strength was calculated by the equation shown below:

$$\Delta S \% = [(S_n - S_0)/S_0] \times 100$$

where $S_0$ is the average shear strength of a reference example; and
$S_n$ is the average shear strength of a comparing example.

Table 2

| Sample ID | Laminate Layer Construction in order of: 21/22/23/24/25[b] | Thickness (mm) | Average Peel Strength (N/25.4 mm) | Improvement of Average Peel Strength (%) |
|---|---|---|---|---|
| CE1*,[a] | A1/-/U1/-/A1 | 0.659 | 52.9 | - |
| CE2 | A1/-/C1/-/A1 | 0.612 | 53.7 | 2 |
| CE3 | A1/B1/U1/B1/A1 | 0.738 | 42.3 | -20 |
| E1 | A1/B1/C1/B1/A1 | 0.602 | 139.2 | 163 |
| E2 | A1/B1/C2/B1/A1 | 0.599 | 130.0 | 146 |
| E3 | A1/B1/C3/B1/A1 | 0.605 | 140.6 | 166 |
| E4 | A1/B2/C1/B2/A1 | Not determined | 69.1 | 31 |

[a] the "*" indicates the comparative example is the reference example used for the peel strength improvement calculation.

[b] the "/" is used to separate each distinctive layer with the adjacent layer(s), and the "-" represents that the corresponding tie layer 22 or 24 is excluded.

From the results of Table 2, the followings are evident.

Comparison between the average peel strength data of CE2 and CE1, both were constructed without the tie layers 22 and 24, the laminate of CE2 having a treated fabric (F1) for the fabric layer 23 provides essentially no improvement versus the laminate of CE1 having an untreated fabric (U1) for the fabric layer 23. The results suggest that a simple treatment with a surface activation agent on the fabric composed of aromatic polyamide fibers imparts no bonding strength improvement between the fabric and the thermoplastic film.

Furthermore, CE3 having the additional tie layers 22 and 24 as compared to the laminate structure of CE1, one expected to see the laminate of CE3 to show some improvement in the bonding strength between the fabric and the thermoplastic film of top layer 21. However, CE3 provides an unexpected decrease of 20% in the average peel strength than that of the laminate of CE1. The results suggest that having additional tie layer between the fabric and the thermoplastic film also failed to yield the desired bonding strength improvement.

Surprisingly, the thermoplastic composite laminate of E1-E4 provide significant improvements in the average peel strength by incorporation of the additional tie layer (i.e. B1 or B2) as well as using a surface activation agent treated fabric (i.e. F1, F2, or F3) for fabric layer 23 as compared to that of the laminates of CE1-CE3. The significant bonding strength improvement provided by the inventive thermoplastic composite laminate (E1-E4) may be attributed to the synergetic effect between the surface activation agent treated fabric and the polymeric materials of the tie layer.

In one embodiment of the present invention, the thermoplastic composite laminate comprises in order of:

(a) a top layer composed of at least one thermoplastic film;
(b) a first tie layer;
(c) a fabric layer composed of a fabric comprising aromatic polyamide fibers and a surface activation agent;
(d) a second tie layer; and
(e) a bottom layer composed of at least one thermoplastic film;

wherein

the fabric layer 13 has a first surface and a second surface;

the first tie layer 12 is bound to the top layer 11 and the first surface of the fabric layer 13, and the second tie layer 14 is bound to the second surface of the fabric layer 13 and the bottom layer 15;

the thermoplastic film comprises or is produced from polyamide;

each of the first tie layer 12 and the second tie layer 14 independently comprises chemically modified ethylene-vinyl acetate copolymer, or ethylene-methacrylic acid copolymer;

the aromatic polyamide fibers are produced from poly(m-phenylene isophthalamide) homopolymer, poly(m-phenylene isophthalamide) copolymer, or a mixture thereof; and

the surface activation agent is silane, epoxide, or isocyanate.

Table 3

| Sample ID | Laminate Construction in order of: 22/23/24/25[b] | Thickness (mm) | Average Peel Strength (N/25.4 mm) | Improvement of Average Peel Strength (%) |
|---|---|---|---|---|
| CE4*,[a] | A1/-/U2/-/A1 | 0.527 | 61.4 | - |
| CE5 | A1/-/C4/-/A1 | 0.544 | 61.8 | <1 |
| CE6 | A1/B1/U2/B1/A1 | 0.625 | 71.7 | 17 |
| E5 | A1/B1/C4/B1/A1 | 0.619 | 108.7 | 77 |

[a]the "*" indicates the comparative example is the reference example used for the peel strength improvement calculation.

[b] the "/" is used to separate each distinctive layer with the adjacent layer(s); and the "-" represented that the corresponding tie layer 22 or tie layer 24 is excluded.

From the results of Table 3, the followings are evident.

Comparison between the average peel strength data of CE5 and CE4, the results suggest that simple treatment with a surface activation agent on the fabric (i.e. F4), which is composed of aromatic polyamide fibers and used for the fabric layer 23 imparts no bonding strength improvement between the fabric and the thermoplastic film.

Furthermore, by inserting the additional tie layers (b) and (d) to the laminate structure of CE4 to form the laminate of CE6, one did see a moderate increase (i.e. 17%) in the bonding strength between the fabric and the thermoplastic film.

In contrast, the laminate of E5, which is an embodiment of the present invention, provides much higher improvement (about 77%) in the average peel strength by inserting the additional tie layers 22 and 24 (i.e. B1) as well as using a surface activation agent treated fabric (i.e. F4) for the fabric layer 23 as compared to that of the laminates of CE4-CE6. The significant bonding strength improvement provided by the inventive thermoplastic composite laminate (E5) may be attributed to the synergetic effect between the surface activation agent treated fabric and the polymeric materials of the tie layer. More specifically, the significant improvement in E5 may be attributed to the synergetic effect between the silane present in the treated fabric F4, and the anhydride modified ethylene vinyl acetate copolymer for the tie layer.

In one embodiment of the present invention, the thermoplastic composite laminate comprises in order of:

(a) a top layer composed of at least one thermoplastic film;
(b) a first tie layer;
(c) a fabric layer composed of a fabric comprising aromatic polyamide fibers and a surface activation agent;
(d) a second tie layer; and

(e) a bottom layer composed of at least one thermoplastic film;

wherein

the fabric layer 13 has a first surface and a second surface;

the first tie layer 12 is bound to the top layer 11 and the first surface of the fabric layer 13, and the second tie layer 14 is bound to the second surface of the fabric layer 13 and the bottom layer 15;

the thermoplastic film comprises or is produced from polyamide;

each of the first tie layer 12 and the second tie layer 14 independently comprises chemically modified ethylene-vinyl acetate copolymer;

the aromatic polyamide fibers are produced from poly(p-phenylene terephthalamide) homopolymer, poly(p-phenylene terephthalamide) copolymer, or a mixture thereof; and

the surface activation agent is silane.

In one embodiment of the present invention, the chemically modified ethylene-vinyl acetate copolymer is modified with a chemical selected from maleic acid, itaconic acid and anhydrides thereof.

Table 4

| Sample ID | Laminate Construction in order of: 21/22/23/24/25[b] | Thickness (mm) | Average Shear Strength (MPa) | Improvement of Average Shear Strength (%) |
|---|---|---|---|---|
| CE7*,[a] | A2/-/U2/-/A2 | 0.674 | 3.6 | - |
| CE8 | A2/-/F4/-/A2 | 0.679 | 3.6 | - |
| CE9 | A2/B3/U2/B3/A2 | 0.687 | 4.6 | 28 |
| E6 | A2/B3/F4/B3/A2 | 0.678 | 5.7 | |

[a] the "*" indicates the comparative example is the reference example used for the shear strength improvement calculation.
[b] the "/" is used to separate each distinctive layer with the adjacent layer(s); and the "-" represented that the corresponding tie layer 22 or tie layer 24 is excluded.

From the results of Table 4, the followings are evident.

Comparison between the average shear strength data of CE7 and CE8, the results suggest that simple treatment with a surface activation agent on the fabric (i.e. F4), which is composed of aromatic polyamide fibers and used for the fabric layer 23 imparts no bonding strength improvement between the fabric and the thermoplastic film.

Furthermore, by inserting the additional tie layers 22 and 2 to the laminate structure of CE7 to form the laminate of CE9, one did see a moderate increase (i.e. 28%) in the bonding strength between the fabric and the thermoplastic film.

Nevertheless, the laminate of E6, which is an embodiment of the present invention, provides much higher improvement (about 58%) in the average shear strength by inserting the additional tie layers 22 and 24 (i.e. B3) as well as using a surface activation agent treated fabric (i.e. F4) for the fabric layer 23 as compared to that of the laminates of CE7-CE9. Likewise, the significant improvement in E6 may be attributed to the synergetic effect between the silane present in the treated fabric F4, and the anhydride modified ethylene-acrylic acid copolymer for the tie layer.

In one embodiment of the present invention, the thermoplastic composite laminate comprises in order of:

(a) a top layer composed of at least one thermoplastic film;
(b) a first tie layer;
(c) a fabric layer composed of a fabric comprising aromatic polyamide fibers and a surface activation agent;
(d) a second tie layer; and
(e) a bottom layer composed of at least one thermoplastic film;

wherein

the fabric layer 13 has a first surface and a second surface;

the first tie layer 12 is bound to the top layer 11 and the first surface of the fabric layer 13, and the second tie layer 14 is bound to the second surface of the fabric layer 13 and the bottom layer 15;

the thermoplastic film comprises or is produced from polycarbonate;

each of the first tie layer 12 and the second tie layer 14 independently comprises chemically modified ethylene-acrylic acid copolymer;

the aromatic polyamide fibers are produced from poly(p-phenylene terephthalamide) homopolymer, poly(p-phenylene terephthalamide) copolymer, or a mixture thereof; and

the surface activation agent is silane.

In one embodiment of the present invention, the chemically modified ethylene-acrylic acid copolymer is an anhydride modified ethylene-acrylate copolymer.

In order to demonstrate peel strength test and shear strength test are comparable, both of the peel strength test and shear strength test were used for testing the thermoplastic composite laminates of E5 and E7, the average peel strength data in unit of N/25.4 mm and the average shear strength data in unit of MPa were recorded and listed in Tables 5.

Table 5

| Sample ID | Laminate Construction in order of: 21/22/23/24/25[a] | Thickness (mm) | Average Shear Strength (MPa) | Improvement of Average Shear Strength (%) |
|---|---|---|---|---|
| E5 | A1/B1/F4/B1/A1 | 0.619 | 108.7 | 6.5 |
| E7 | A1/B3/F4/B3/A1 | 0.649 | 82.7 | 5 |

[a]the "/" is used to separate each distinctive layer with the adjacent layer(s); and the "-" represented that the corresponding tie layer 22 or tie layer 24 is excluded.

From the results of Table 5, the followings are evident.

Comparison between the average peel strength data of E5 and E7, the average peel strength data of E5 is greater than that of E7, and is about 1.3 times that of E7. Comparison between the average shear strength data of E5 and E7, likewise, the average shear strength of E5 is greater than that of E7, and is about 1.3 times that of E7. The results suggest that peel strength and shear strength test are comparable.

While the invention has been illustrated and described in typical embodiments, it is not intended to be limited to the details shown, since various modifications and substitutions are possible without departing from the spirit of the present invention. As such, modifications and equivalents of the invention herein disclosed may occur to persons skilled in the art using no more than routine experimentation, and all such modifications and equivalents are believed to be within the spirit and scope of the invention as defined by the following claims.

**Claims**

1. A thermoplastic composite laminate comprising in order of:

   (a) a top layer composed of at least one thermoplastic film,
   (b) a first tie layer,
   (c) a fabric layer composed of a fabric comprising aromatic polyamide fibers and a surface activation agent,
   (d) a second tie layer, and
   (e) a bottom layer composed of at least one thermoplastic film,

   wherein
   the fabric layer has a first surface and a second surface,
   the first tie layer is bound to the top layer and the first surface of the fabric layer and the second tie layer is bound to the second surface of the fabric layer and the bottom layer,
   the thermoplastic film of the top or bottom layer comprises or is produced from polyamide, polycarbonate, or a mixture thereof,
   each of the first tie layer and the second tie layer independently comprises ethylene-vinyl acetate copolymer, chemically modified ethylene-vinyl acetate copolymer, ethylene-methacrylate copolymer, ethylene-acrylic acid copolymer, chemically modified ethylene-acrylic acid copolymer, or a mixture thereof, wherein the ethylene-methacrylate copolymer is ethylene-methacrylic acid copolymer,
   the aromatic polyamide fibers are produced from poly(p-phenylene terephthalamide) homopolymer, poly(p-phenylene terephthalamide) copolymer, poly(m-phenylene isophthalamide) homopolymer, poly(m-phenylene isophthalamide) copolymer, polysulfonamide homopolymer, polysulfonamide copolymer, or a mixture thereof,
   the surface activation agent is silanes, epoxides, or isocyanates, and
   the thermoplastic composite laminate has a 25% or more increase in the average bonding strength as compared to that of a comparative laminate having an untreated fabric for the fabric layer and lacking the first tie layer and the second tie layer.

2. The thermoplastic composite laminate of Claim 1, wherein the thermoplastic film comprises polyamide.

3. The thermoplastic composite laminate of Claim 1 or 2, wherein the total thickness of the thermoplastic composite laminate is from 0.1 mm to 5 mm.

4. The thermoplastic composite laminate of any one of Claims 1 to 3, wherein the surface activation agent is selected from the group consisting of γ-methacryloxypropyl trimethoxysilane, γ-glycidoxypropyl trimethoxysilane, β-(3,4-epoxycyclohexyl)ethyl trimethoxysilane, γ-mercaptopropyl trimethoxysilane, N-β-(aminoethyl)-γ-aminopropyl trimehthoxysilane, γ-aminopropyl trimethoxysilane, γ-isocyanatopropyl trimethoxysilane; phenolic glycidyl ethers, aromatic glycidyl ethers, glycerol polyglycidyl ethers, glycidyl amines, cycloaliphatic epoxides; hexamethylene diisocyanate, isophorone diisocyanate, 2,4-toluene diisocyanate, 2,6-toluene diisocyanate, and 4,4'-methylene diphenyl diisocyanate.

5. The thermoplastic composite laminate of any one of Claims 1 to 4, wherein the fabric for the fabric layer is produced by a method comprising: i) applying a coating composition onto an untreated fabric to obtain a wet fabric, and ii) drying the wet fabric at a temperature ranging from ambient temperature to about 220°C, for 1 minute to 60 minutes, wherein the amount of the surface activation agent is from 1 weight % to 20 weight %, based on the total weight of the coating composition.

6. The thermoplastic composite laminate of Claim 5, wherein the method for applying the coating composition onto the untreated fabric includes dipping, soaking, and spraying.

7. The thermoplastic composite laminate of Claim 5 or 6, wherein the basis weight of the untreated fabric is from 20 $g/m^2$ to 660 $g/m^2$.

8. The thermoplastic composite laminate of any one of Claims 1 to 7, wherein the fabric for the fabric layer comprises a surface activation agent in an amount of from 0.5 weight % to 15 weight %, based on the total weight of the fabric.

9. The thermoplastic composite laminate of any one of Claims 1 to 8 is manufactured by a method selected from hot pressing, thermal compression molding, autoclave molding, and double-belt hot melt pressing.

10. An article comprising the thermoplastic composite laminate of any one of Claims 1 to 9, wherein the article is a housing or a protective cover for a mobile electronic device.

**Patentansprüche**

1. Thermoplastisches Verbundlaminat umfassend, in der Reihenfolge:

(a) eine Deckschicht, die aus mindestens einer thermoplastischen Folie besteht,
(b) eine erste Haftschicht,
(c) eine Textilstoffschicht, die aus einem Textilstoff besteht, der aromatische Polyamidfasern und ein Oberflächenaktivierungsmittel umfasst,
(d) eine zweite Haftschicht und
(e) eine untere Schicht, die aus mindestens einer thermoplastischen Folie besteht,

wobei
die Textilstoffschicht eine erste Oberfläche und eine zweite Oberfläche aufweist, die erste Haftschicht an die Deckschicht und die erste Oberfläche der Textilstoffschicht gebunden ist und die zweite Haftschicht an die zweite Oberfläche der Textilstoffschicht und die untere Schicht gebunden ist,
die thermoplastische Folie der Deck- oder unteren Schicht Polyamid, Polycarbonat oder eine Mischung davon umfasst oder daraus hergestellt ist,
jede von der ersten Haftschicht und der zweiten Haftschicht unabhängig Ethylen-Vinylacetat-Copolymer, chemisch modifiziertes Ethylen-Vinylacetat-Copolymer, Ethylen-Methacrylat-Copolymer, Ethylen-Acrylsäure-Copolymer, chemisch modifiziertes Ethylen-Acrylsäure-Copolymer oder eine Mischung davon umfasst, wobei das Ethylen-Methacrylat-Copolymer Ethylen-Methacrylsäure-Copolymer ist,
die aromatischen Polyamidfasern aus Poly(p-phenylenterephthalamid)-Homopolymer, Poly(p-phenylenterephthalamid)-Copolymer, Poly(m-phenylenisophthalamid)-Homopolymer, Poly(m-phenylenisophthalamid)-Copolymer, Polysulfonamid-Homopolymer, Polysulfonamid-Copolymer oder einer Mischung davon hergestellt sind,
das Oberflächenaktivierungsmittel Silane, Epoxide oder Isocyanate ist und

das thermoplastische Verbundlaminat eine 25 % oder stärkere Erhöhung der durchschnittlichen Bindungsstärke im Vergleich mit derjenigen eines vergleichsweisen Laminats aufweist, das einen unbehandelten Textilstoff für die Textilstoffschicht aufweist und dem die erste Haftschicht und die zweite Haftschicht fehlen.

2. Thermoplastisches Verbundlaminat nach Anspruch 1, wobei die thermoplastische Folie Polyamid umfasst.

3. Thermoplastisches Verbundlaminat nach Anspruch 1 oder 2, wobei die Gesamtdicke des thermoplastischen Verbundlaminats 0,1 mm bis 5 mm beträgt.

4. Thermoplastisches Verbundlaminat nach einem der Ansprüche 1 bis 3, wobei das Oberflächenaktivierungsmittel aus der Gruppe ausgewählt ist bestehend aus γ-Methacryloxypropyltrimethoxysilan, γ-Glycidoxypropyltrimethoxysilan, β-(3,4-Epoxycyclohexyl)ethyltrimethoxysilan, γ-Mercaptopropyltrimethoxysilan, N-(ß-(Aminoethyl)-γ-aminopropyltrimethoxysilan, γ-Aminopropyltrimethoxysilan, γ-Isocyanatpropyltrimethoxysilan; phenolischen Glycidylethern, aromatischen Glycidylethern, Glycerinpolyglycidylethern, Glycidylaminen, cycloaliphatischen Epoxiden; Hexamethylendiisocyanat, Isophorondiisocyanat, 2,4-Toluoldiisocyanat, 2,6-Toluoldiisocyanat und 4,4'-Methylendiphenyldiisocyanat.

5. Thermoplastisches Verbundlaminat nach einem der Ansprüche 1 bis 4, wobei der Textilstoff für die Textilstoffschicht durch ein Verfahren hergestellt wird, umfassend: i) Aufbringen einer Beschichtungszusammensetzung auf einen unbehandelten Textilstoff, um einen nassen Textilstoff zu erhalten, und ii) Trocknen des nassen Textilstoffs bei einer Temperatur im Bereich von der Umgebungstemperatur bis etwa 220°C 1 Minute bis 60 Minuten lang, wobei die Menge des Oberflächenaktivierungsmittels 1 Gew.-% bis 20 Gew.-%, auf das Gesamtgewicht der Beschichtungszusammensetzung bezogen, beträgt.

6. Thermoplastisches Verbundlaminat nach Anspruch 5, wobei das Verfahren für das Aufbringen der Beschichtungszusammensetzung auf den unbehandelten Textilstoff Eintauchen, Einweichen und Besprühen umfasst.

7. Thermoplastisches Verbundlaminat nach Anspruch 5 oder 6, wobei das Flächengewicht des unbehandelten Textilstoffs 20 g/m$^2$ bis 660 g/m$^2$ beträgt.

8. Thermoplastisches Verbundlaminat nach einem der Ansprüche 1 bis 7, wobei der Textilstoff für die Textilstoffschicht ein Oberflächenaktivierungsmittel in einer Menge von 0,5 Gew.-% bis 15 Gew.-%, auf das Gesamtgewicht des Textilstoffs bezogen, beträgt.

9. Das thermoplastische Verbundlaminat nach einem der Ansprüche 1 bis 8 wird durch ein Verfahren hergestellt ausgewählt unter Heißpressen, thermischem Kompressionsformen, Autoklavenformen und Doppelband-Heißschmelzpressen.

10. Artikel umfassend das thermoplastische Verbundlaminat nach einem der Ansprüche 1 bis 9, wobei der Artikel ein Gehäuse oder eine Schutzhülle für eine mobile elektronische Vorrichtung ist.


**Revendications**

1. Stratifié composite thermoplastique comprenant dans l'ordre:

(a) une couche supérieure composée d'au moins un film thermoplastique,
(b) une première couche de liaison,
(c) une couche textile composée d'un textile comprenant des fibres de polyamide aromatiques et un agent d'activation de surface,
(d) une seconde couche de liaison, et
(e) une couche inférieure composée d'au moins un film thermoplastique,

la couche textile ayant une première surface et une seconde surface,
la première couche de liaison étant liée à la couche supérieure et à la première surface de la couche textile et la seconde couche de liaison étant liée à la seconde surface de la couche textile et à la couche inférieure,
le film thermoplastique de la couche supérieure ou inférieure comprend ou est produit à partir de polyamide, polycarbonate, ou un mélange de ceux-ci,

chacune de la première couche de liaison et la seconde couche de liaison comprend indépendamment un copolymère d'éthylène-acétate de vinyle, un copolymère d'éthylène-acétate de vinyle chimiquement modifié, un copolymère d'éthylène-méthacrylate, un copolymère d'éthylène-acide acrylique, un copolymère d'éthylène-acide acrylique chimiquement modifié, ou un mélange de ceux-ci,

le copolymère d'éthylène-méthacrylate étant un copolymère d'éthylène-acide méthacrylique,

les fibres de polyamide aromatiques sont produites à partir d'homopolymère de poly(téréphtalamide de *p*-phénylène), de copolymère de poly(téréphtalamide de *p*-phénylène), d'homopolymère de poly(isophtalamide de *m*-phénylène), de copolymère de poly(isophtalamide de *m*-phénylène), d'homopolymère de polysulfonamide, de copolymère de polysulfonamide, ou un mélange de ceux-ci,

l'agent d'activation de surface étant des silanes, des époxydes, ou des isocyanates, et

le stratifié composite thermoplastique ayant une augmentation de 25 % ou plus dans la force de liaison moyenne telle que comparée à celle d'un stratifié comparatif ayant un textile non traité pour la couche textile et ne présentant pas la première couche de liaison et la seconde couche de liaison.

2. Stratifié composite thermoplastique selon la revendication 1, le film thermoplastique comprenant un polyamide.

3. Stratifié composite thermoplastique selon la revendication 1 ou 2, l'épaisseur totale du stratifié composite thermoplastique étant de 0,1 mm à 5 mm.

4. Stratifié composite thermoplastique selon l'une quelconque des revendications 1 à 3, l'agent d'activation de surface étant sélectionné dans le groupe constitué du γ-méthacryloxypropyl triméthoxysilane, γ-glycidoxypropyl triméthoxysilane, β-(3,4-époxycyclohexyl)éthyl triméthoxysilane, γ-mercaptopropyl triméthoxysilane, N-β-(aminoéthyl)-γ-aminopropyl triméthoxysilane, γ-aminopropyl triméthoxysilane, γ-isocyanatopropyl triméthoxysilane; des éthers phénoliques glycidyliques, des éthers glycidyliques aromatiques, des éthers polyglycidyliques de glycérol, des glycidyl amines, des époxydes cycloaliphatiques; du diisocyanate d'hexaméthylène, du diisocyanate d'isophorone, du diisocyanate de 2,4-toluène, du diisocyanate de 2,6-toluène, et du diisocyanate de 4,4'-méthylène diphényle.

5. Stratifié composite thermoplastique selon l'une quelconque des revendications 1 à 4, le textile pour la couche textile étant produit selon un procédé comprenant: i) l'application d'une composition de revêtement sur un textile non traité pour obtenir un textile humide, et ii) le séchage du textile humide à une température s'étendant de la température ambiante à environ 220°C, durant 1 minute à 60 minutes, la quantité de l'agent d'activation de surface étant de 1 % en poids à 20 % en poids, sur la base du poids total de la composition de revêtement.

6. Stratifié composite thermoplastique selon la revendication 5, le procédé d'application de la composition de revêtement sur le textile non traité comprenant l'immersion, le trempage, et la pulvérisation.

7. Stratifié composite thermoplastique selon la revendication 5 ou 6, le poids de base du textile non traité étant de 20 g/m$^2$ à 660 g/m$^2$.

8. Stratifié composite thermoplastique selon l'une quelconque des revendications 1 à 7, le textile pour la couche textile comprenant un agent d'activation de surface en une quantité de 0,5 % en poids à 15 % en poids, sur la base du poids total du textile.

9. Stratifié composite thermoplastique selon l'une quelconque des revendications 1 à 8 fabriqué selon un procédé sélectionné parmi le pressage à chaud, le moulage par compression thermique, le moulage en autoclave, et le pressage de thermofusion à double courroie.

10. Article comprenant le stratifié composite thermoplastique selon l'une quelconque des revendications 1 à 9, l'article étant un logement ou un couvercle protecteur d'un dispositif électronique portable.

*FIG. 1*

*FIG. 2*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010036406 A2
- US 20110171867 A1
- US 3063966 A
- US 3227793 A
- US 3287324 A
- US 3414645 A
- US 3869430 A
- US 3869429 A
- US 3767756 A
- US 5667743 A
- US 4172938 A
- US 3819587 A
- US 3673143 A
- US 3354127 A
- US 3094511 A
- CN 1389604 A

**Non-patent literature cited in the description**

- *CHEMICAL ABSTRACTS,* 2530-83-8
- *CHEMICAL ABSTRACTS,* 13236-02-7
- *CHEMICAL ABSTRACTS,* 9016-87-9